# EUROPEAN PATENT APPLICATION

(11) **EP 4 530 778 A1**
(43) Date of publication of application: **02.04.2025**
(21) Application number: 24185160.9
(22) Date of filing: 27.06.2024
(51) Int. Cl.: G05B 19/418, B01J 19/00, C01B 3/04

(54) **SYSTEM AND METHOD FOR MANAGING AMMONIA CRACKING PLANT, AND COMPUTER-READABLE MEDIUM**

(30) Priority: 21.07.2023 KR 20230095480
(71) Applicant: SK Innovation Co., Ltd., Seoul 03188 (KR)
(72) Inventor: BAE, Sun Hyuk, 34124 Daejeon (KR); KIM, Jae Jeong, 34124 Daejeon (KR); PARK, Chan Saem, 34124 Daejeon (KR)
(74) Representative: Prüfer & Partner mbB Patentanwälte · Rechtsanwälte

(57) **Abstract**

The system according to the present disclosure includes a model generation module to generate a digital twin model including a replication model of a physical component of the ammonia cracking plant; an input module to input dynamic energy requirement and output information of an ammonia cracking apparatus included in the ammonia cracking plant into the digital twin model; an emergency condition imposition module configured to impose, for a preset emergency scenario, an emergency condition on the replication model of the physical component; a data collection and comparison module configured to collect data from the digital twin model under the imposed emergency condition, and compare first data when the emergency condition is imposed and second data when the emergency condition is not imposed; and a scenario generation module configured to generate a control scenario for the preset emergency scenario based on comparison results of the first data and the second data.

## Description

### [BACKGROUND OF THE INVENTION]

### 1. Field of the Invention

The present disclosure relates to a system and a method for managing an ammonia cracking plant. It further relates to a computer-readable medium.

### 2. Description of the Related Art

Recently, as various environmental problems are becoming a major issue throughout the world, demand for the introduction of eco-friendly alternative energy instead of existing internal combustion engines not only for general vehicles but also for heavy equipment such as an excavator is increasing. Thereby, a fuel cell system which uses fuel cells (FCs) as a power source has been in the spotlight.

In order to ensure a smooth operation and a high performance of the fuel cell system, the role of an Energy Management System (EMS) is important to appropriately determine how to distribute power demands between the power sources. To this end, stable and reliable operation of the EMS is required.

In a situation where a plurality of pipes exist, when the flow rate is concentrated in a specific pipe, it is necessary to equalize the flow rate by automatically reducing the flow rate of the corresponding pipe. It is difficult to describe the complex interaction between different components of the system by conventional methods. To solve this problem, a digital twins (DTs) are being developed for providing accurate real-time simulation of entire physical systems.

### [SUMMARY OF THE INVENTION]

According to one aspect of the present disclosure, it is an object to provide a system and a method capable of ensuring stable operation of an ammonia cracking plant under emergency situation conditions.

To achieve the above object, according to an aspect of the present invention, there is provided a system for managing an ammonia cracking plant, the system including: a model generation module configured to generate a digital twin model including a replication model of a physical component of the ammonia cracking plant; an input module configured to input dynamic energy requirement and output information of an ammonia cracking apparatus included in the ammonia cracking plant into the digital twin model; an emergency condition imposition module configured to impose, for a preset emergency scenario, an emergency condition on the replication model of the physical component; a data collection and comparison module configured to collect data from the digital twin model under the imposed emergency condition, and compare first data when the emergency condition is imposed and second data when the emergency condition is not imposed; and a scenario generation module configured to generate a control scenario for the preset emergency scenario based on comparison results of the first data and the second data.

According to an embodiment, the physical component of the ammonia cracking plant may include: the ammonia cracking apparatus, a sensor, and a control device, and the model generation module is configured to update the digital twin model using real-time data of the ammonia cracking plant.

According to an embodiment, the input module is configured to compare a difference between a dynamic energy requirement actually needed for the digital twin model and an output quantity of the output information of the ammonia cracking plant.

According to an embodiment, the emergency condition imposition module may be configured to: set a plurality of virtual emergency situations in the digital twin model to prepare for potential emergency situations; evaluate response and performance of the digital twin model in the set virtual emergency situation; and predict adjustments required to ensure safety and stability of the ammonia cracking plant.

According to an embodiment, the data collection and comparison module is configured to identify weaknesses of the system which may occur in each emergency situation and a degree of vulnerability for each replication model based on the data.

According to an embodiment, the scenario generation module is configured to generate a control scenario for the potential emergency situation using comparative data between the first data and the second data.

According to an embodiment, the digital twin model may include: a plant control unit corresponding to a replication model for the control device configured to control the ammonia cracking apparatus; and a data collection unit configured to collect the real-time data, preferably the flow rate of a feed for a reforming reaction and the flow rate of a feed for a combustion reaction.

According to an embodiment, the physical component of the ammonia cracking plant may further include a feed blower, a flow rate control valve, and at least one reaction unit, wherein the sensor may include a temperature sensor and a pressure sensor.

According to an embodiment, the at least one reaction unit may include: a plurality of reaction parts configured to receive a flow rate of a feed for a reforming reaction and a flow rate of a feed for a combustion reaction; and a combustion unit configured to output a combustion flue gas.

According to another aspect of the present invention, there is provided a method for managing an ammonia cracking plant, the method including: generating a digital twin model comprising a replication model of a physical component of the ammonia cracking plant; inputting a dynamic energy requirement and output information of an ammonia cracking apparatus included in the ammonia cracking plant into the digital twin model; imposing, for a preset emergency scenario, an emergency condition on the replication model of the physical component; collecting data from the digital twin model under the imposed emergency condition; comparing first data when the emergency condition is imposed and second data when the emergency condition is not imposed; and generating a control scenario for the preset emergency scenario based on comparison results of the first data and the second data.

According to another aspect of the present disclosure, the inputting step further includes comparing a difference between the dynamic energy requirement actually required for the digital twin model and an output quantity of the output information of the ammonia cracking plant.

According to another aspect of the present disclosure the data comparison step further includes generating comparative data including results of comparing the first data and the second data, and identifying weaknesses of the system which may occur in each emergency situation and a degree of vulnerability for each replication model.

According to another aspect of the present disclosure, the method further includes generating control scenarios for a plurality of potential emergency situations using the comparative data between the first data and the second data.

According to another aspect of the present invention, a computer-readable medium is provided, which stores instructions in the form of program code, which, when executed by a processor, is configured to generate a program module to perform operations of an ammonia cracking plant under emergency situation conditions.

According to an embodiment of the present disclosure, by ensuring stable operation of the ammonia cracking plant under emergency situation conditions, the reliability of the system may be improved.

In addition, according to an embodiment of the present disclosure, by designing the digital twin model to closely imitate operations of the plant under various conditions, there are effects of monitoring the plant in real time, analyzing and optimizing the operation thereof.

In addition, according to an embodiment of the present disclosure, by establishing a scenario of appropriate actions to be implemented in response to a specific emergency situation in advance, the safety of the system may be ensured.

Further, according to an embodiment of the present disclosure, there are effects of providing assistance in identifying potential regions for improvement, and ultimately contributing to the overall sustainability and cost-effectiveness of the plant.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a block diagram for describing a system according to an embodiment of the present disclosure;
FIG. 2 is a relationship diagram between a plant and a digital twin model according to an embodiment of the present disclosure; and
FIG. 3 is a flow chart illustrating procedures of a method according to an embodiment of the present disclosure.

### [DETAILED DESCRIPTION OF THE INVENTION]

Hereinafter, the present disclosure will be described in detail through embodiments with reference to the accompanying drawings. However, the embodiments are merely illustrative and the present disclosure is not limited to the specific embodiments described by way of example.

The same reference numerals are denoted to the same components throughout the present disclosure. The present disclosure does not describe all elements of the embodiments, and general contents in the technical field to which the present disclosure pertains or overlapping contents between the embodiments will not be described. The terms `unit, module, member and block' used herein may be implemented as software or hardware, and depending on the embodiments, a plurality of `units, modules, members and blocks' may be implemented as one component, or one 'part, module, member, or block' may include a plurality of components.

Throughout the specification, when the explanatory phrase a part is "connected" to another part is used, this includes not only the case where the part is "directly connected" to the other part, but also the case where the part is "indirectly connected" to the other part, and the indirect connection includes connection through a wireless communication network.

In addition, when the explanatory phrase a part "comprises or includes" a component is used, this means that the part may further include the component without excluding other components, unless there is a description opposite thereto.

Throughout the specification, when the explanatory phrase a member is located "on" another member is used, this includes not only the case where the member is in contact with the other member, but also the case where another member exists between the two members.

Terms such as first and second, etc. are used to distinguish one component from another component, and the components are not limited by the above-described terms.

The singular forms "a," "an" and "the" are intended to include the plural forms as well, unless the context clearly indicates otherwise.

The identification numerals for each step is used for the convenience of description. The identification numerals do not describe the order of each step, and each step may be performed differently from the specified order unless a specific order is clearly described in the context.

In this specification, the 'device according to the present disclosure' includes all various devices that can perform computational processing and provide results thereof to a user. For example, the device according to the present disclosure may include all of a computer, a server device and a portable terminal, or may be any form thereof.

Here, the computer may include, for example, a laptop or desktop computer, laptop PC, tablet PC, slate PC, and the like equipped with a web browser.

The server device is a server that processes information by performing communication with an external device, and may include an application server, computing server, database server, file server, game server, mail server, proxy server and web server.

The portable terminal is, for example, a wireless communication device with which portability and mobility are assured, and may include: all types of handheld wireless communication devices such as a personal communication system (PCS), global system for mobile communications (GSM), personal digital cellular (PDC), personal handyphone system (PHS), personal digital assistant (PDA), international mobile telecommunication (IMT)-2000, code division multiple access (CDMA)-2000, wideband code division multiple access (W-CDMA), wireless broadband internet (WiBro) terminal, and smart phone, etc.; and wearable devices such as a watch, ring, bracelet, anklet, necklace, glasses, contact lenses, and head-mounted-device (HMD), etc.

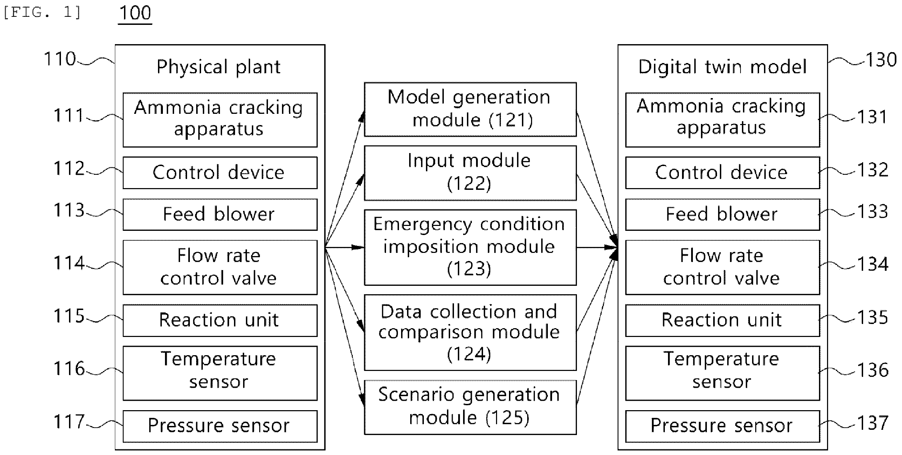

FIG. 1 is a block diagram for describing a system according to an embodiment of the present disclosure.

Referring to FIG. 1, a system 100 may manage an ammonia cracking plant. The system 100 may include a physical plant 110, a model generation module 121, an input module 122, an emergency condition imposition module 123, a data collection and comparison module 124, a scenario generation module 125, and a digital twin model 130.

The physical plant 110 may be an ammonia cracking plant. However, it is not limited thereto. The physical plant 110 implemented as the ammonia cracking plant may include an ammonia cracking apparatus 111, a control device 112 configured to control the ammonia cracking apparatus 111, a feed blower 113, a flow rate control valve 114, a reaction unit 115, a temperature sensor 116, and a pressure sensor 117. The temperature sensor 116 or pressure sensor 117 may be referred to as a sensor.

The model generation module 121 may generate the digital twin model 130. The digital twin model 130 may include a replication model of a physical component of the physical plant 110. The physical component of physical plant 110 may be, for example, physical components of the ammonia cracking plant. In this case, the physical component of the physical plant 110 may include the ammonia cracking apparatus 111, the control device 112, the feed blower 113, the flow rate control valve 114, the reaction unit 115, the temperature sensor 116, and the pressure sensor 117. The replication model included in the digital twin model 130 may include an ammonia cracking apparatus 131, a control device 132, a feed blower 133, a flow rate control valve 134, a reaction unit 135, a temperature sensor 136, and a pressure sensor 137.

The model generation module 121 may continuously update the digital twin model 130 using real-time data of the ammonia cracking plant for more accurate and specific simulation and prediction.

The input module 122 may input a dynamic energy requirement and output information of the physical plant 110 to the digital twin model 130. For example, the input module 122 may input the dynamic energy requirement to the digital twin model 130, and input the output information of the ammonia cracking apparatus 111 included in the ammonia cracking plant.

The input module 122 may compare a difference between the dynamic energy requirement actually required for the digital twin model 130 and an output quantity of the output information of the ammonia cracking plant.

The emergency condition imposition module 123 may impose, for a preset emergency scenario, emergency conditions on the replication model of the physical components of the physical plant 110.

The emergency condition imposition module 123 may set a plurality of various virtual emergency situations in the digital twin model 130 to prepare for potential emergency situations. In addition, the emergency condition imposition module 123 may evaluate response and performance of the digital twin model 130 in the set virtual emergency situation. Further, the emergency condition imposition module 123 may predict adjustments required to ensure the safety and stability of the ammonia cracking plant.

The data collection and comparison module 124 may collect data from the digital twin model 130 under the imposed emergency conditions. In addition, the data collection and comparison module 124 may compare first data when the emergency condition is imposed and second data when the emergency condition is not imposed. Then, comparative data including results of comparing the first data and the second data may be generated.

Based on the data, the data collection and comparison module 124 may identify weaknesses of the system 100 which may occur in each emergency situation and a degree of vulnerability for each replication model.

The scenario generation module 125 may generate a control scenario for the preset emergency scenario based on the comparative data.

The scenario generation module 125 may generate control scenarios for a plurality of potential emergency situations using the comparative data between the first data and the second data.

According to the above description, by ensuring stable operation of the ammonia cracking plant under emergency situation conditions, the reliability of the system 100 may be improved.

In addition, according to the above description, by designing the digital twin model to closely imitate operations of the plant under various conditions, the system 100 allows monitoring the plant in real time, and analyzing and optimizing the plant operation.

In addition, according to the above description, by establishing a scenario of appropriate actions to be implemented in response to a specific emergency situation in advance, the safety of the system may be ensured.

Further, according to the above description, there are effects of providing assistance in identifying potential regions for improvement, and ultimately contributing to the overall sustainability and cost-effectiveness of the plant.

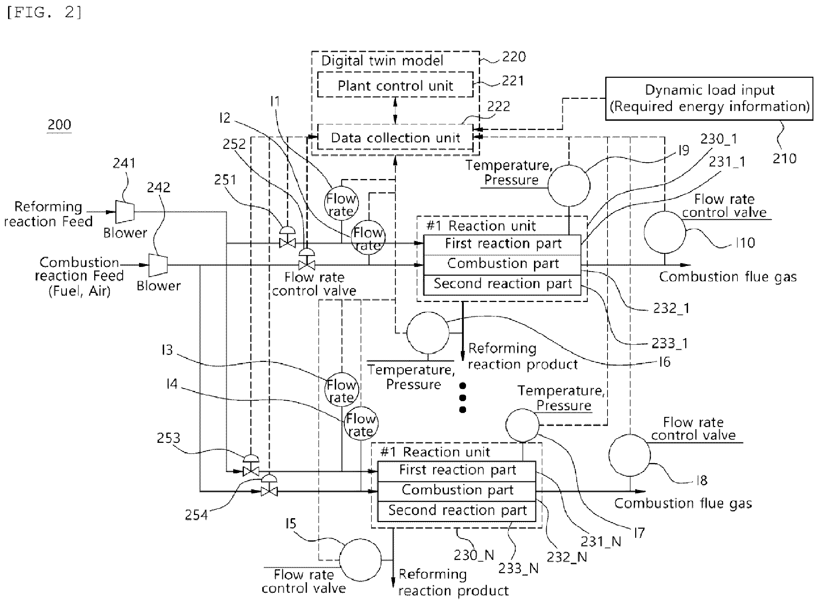

FIG. 2 is a relationship diagram between the plant and the digital twin model according to an embodiment of the present disclosure.

Referring to FIG. 2, a relationship diagram 200 may include a dynamic load input 210, a digital twin model 220, first to N-th reaction units 230_1 to 230_N, first and second blowers 241 and 242, first to fourth control valves 251, 252, 253 and 254, and first to tenth information I1, I2, I3, I4, I5, I6, I7, I8, I9 and I10.

The dynamic load input 210 may correspond to the above-described dynamic energy requirement. The dynamic load input 210 may be an input to the digital twin model 220.

The digital twin model 220 may include a plant control unit 221 corresponding to the replication model for the control device configured to control the ammonia cracking apparatus, and a data collection unit 222 configured to collect real-time data. The data collection unit 222 may receive the dynamic load input 210 and the first to tenth information I1, I2, I3, I4, I5, I6, I7, I8, I9 and I10. The data collection unit 222 may receive the flow rate of a feed for a reforming reaction and the flow rate of a feed for a combustion reaction provided through the first to fourth control valves 251, 252, 253 and 254 as inputs.

The number of first to Nth reaction units 230_1 to 230_N may be N as shown in FIG. 2. Here, N may be an integer of 2 or more, but it is not limited thereto. The first reaction unit 230_1 may include a first reaction part 231_1, a combustion part 232_1, and a second reaction part 233_1. The N-th reaction unit 230_N may include a first reaction part 231_N, a combustion part 232_N, and a second reaction part 233_N. The plurality of reaction parts may receive the flow rate of a feed for a reforming reaction ("reforming reaction feed") and the flow rate of a feed for a combustion reaction ("combustion reaction feed"). The first reaction part 231_1 may receive the reforming reaction feed. The first reaction part 231_1 may output ninth information I9. The combustion part 232_1 may receive the combustion reaction feed. The combustion part 232_1 may output a combustion flue gas and tenth information I10. The second reaction part 233_1 may output sixth information I6 and a reforming reaction product. The first reaction part 231_N may output seventh information I7. The combustion part 232_N may receive the combustion reaction feed. The combustion part 232_N may output the combustion flue gas and eighth information 18. The second reaction part 233_N may output fifth information I5 and the reforming reaction product.

The reforming reaction feed may be input to the first blower 241. The first blower 241 may provide the reforming reaction feed to the first and third control valves 251 and 253. The combustion reaction feed may be input to the second blower 242. The combustion reaction feed may include fuel and air as a feed. The second blower 242 may provide the combustion reaction feed to the second and fourth control valves 252 and 254.

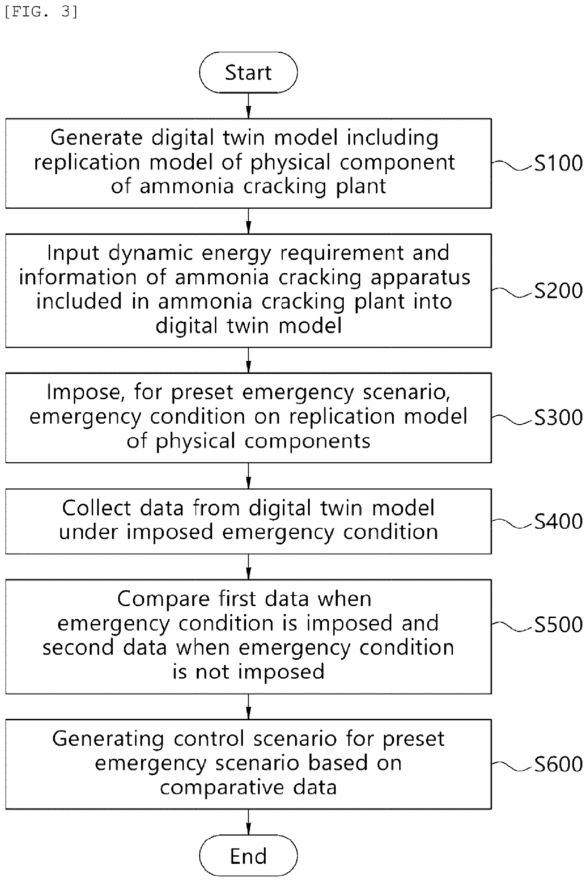

FIG. 3 is a flow chart illustrating procedures of a method according to an embodiment of the present disclosure. Referring to FIG. 3, the method according to an embodiment of the present disclosure may manage the ammonia cracking plant.

First, a step of generating a digital twin model including a replication model of a physical component of the ammonia cracking plant is performed (S100).

When exemplifying in relation to the step S100 with reference to FIG. 1, the model generation module 121 may generate a digital twin model 130 including the replication model of the physical components (e.g., the ammonia cracking apparatus 131, control device 132, feed blower 133, flow rate control valve 134, reaction unit 135, temperature sensor 136, pressure sensors 137, etc.) of the physical plant 110, and continuously update the digital twin model 130 using real-time data of the ammonia cracking plant for more accurate and specific simulation and prediction.

Then, a step of inputting a dynamic energy requirement and output information of the ammonia cracking apparatus included in the ammonia cracking plant into the digital twin model is performed (S200).

When exemplifying in relation to the step S200 with reference to FIG. 1, the input module 122 may input the dynamic energy requirement to the digital twin model 130, and input output information of the ammonia cracking apparatus 111 included in the ammonia cracking plant, then may compare a difference between the dynamic energy requirement actually required for the digital twin model 130 and an output quantity of the output information of the ammonia cracking plant.

Thereafter, a step of imposing, for a preset emergency scenario, an emergency condition on the replication model of the physical components is performed (S300).

When exemplifying in relation to the step S300 with reference to FIG. 1, the emergency condition imposition module 123 may set a plurality of various virtual emergency situations in the digital twin model 130 to prepare for potential emergency situations. In addition, the emergency condition imposition module 123 may evaluate the response and performance of the digital twin model 130 in the set virtual emergency situation. Further, the emergency condition imposition module 123 may predict adjustments required to ensure the safety and stability of the ammonia cracking plant.

Next, a step of collecting data from the digital twin model under the imposed emergency condition is performed (S400).

Then, a step of comparing first data when the emergency condition is imposed and second data when the emergency condition is not imposed is performed (S500).

When exemplifying in relation to the step S400 and step S500 with reference to FIG. 1, the data collection and comparison module 124 may collect data from the digital twin model 130 under the imposed emergency condition, compare the first data when the emergency condition is imposed and the second data when the emergency condition is not imposed, generate comparative data including results of comparing the first data and the second data, and identify weaknesses of the system 100 which may occur in each emergency situation and a degree of vulnerability for each replication model.

Finally, a step of generating a control scenario for the preset emergency scenario based on the comparative data is performed (S600).

When exemplifying in relation to the step S600 with reference to FIG. 1, the scenario generation module 125 may generate a control scenario for the preset emergency scenario based on the comparative data, and generate control scenarios for a plurality of potential emergency situations using the comparative data between the first data and the second data.

Meanwhile, the disclosed embodiments may be implemented in the form of a recording medium which stores instructions executable by a computer. The instructions may be stored in the form of program code, and when executed by the processor, may generate a program module to perform operations of the disclosed embodiments. The recording medium may be implemented as a computer-readable recording medium.

The computer-readable recording medium may include all types of recording media in which instructions that can be decoded by the computer are stored. For example, there may be a read only memory (ROM), random access memory (RAM), magnetic tape, magnetic disk, flash memory, optical data storage device and the like.

As above, the disclosed embodiments have been described with reference to the accompanying drawings. It will be understood by persons skilled in the art to which the present disclosure pertains that the present disclosure may be embodied in forms different from the disclosed embodiments without changing the technical idea or essential features of the present disclosure. The disclosed embodiments are illustrative, and should not be interpreted as limiting.

## Claims

1. A system (100) for managing an ammonia cracking plant, the system (100) comprising:
a model generation module (121) configured to generate a digital twin model (130, 220) including a replication model of a physical component of the ammonia cracking plant;
an input module (122) configured to input dynamic energy requirement and output information of an ammonia cracking apparatus (111, 131) included in the ammonia cracking plant into the digital twin model (130, 220);
an emergency condition imposition module (123) configured to impose, for a preset emergency scenario, an emergency condition on the replication model of the physical component;
a data collection and comparison module (124) configured to collect data from the digital twin model (130, 220) under the imposed emergency condition, and compare first data when the emergency condition is imposed and second data when the emergency condition is not imposed; and
a scenario generation module (125) configured to generate a control scenario for the preset emergency scenario based on comparison results of the first data and the second data.

2. The system according to claim 1, wherein the physical component of the ammonia cracking plant comprises:
the ammonia cracking apparatus (111, 131), a sensor, and a control device (112, 132), and
the model generation module (121) is configured to update the digital twin model (130, 220) using real-time data of the ammonia cracking plant.

3. The system according to claim 1 or 2, wherein the input module (122) is configured to compare a difference between a dynamic energy requirement actually needed for the digital twin model (130, 220) and an output quantity of the output information of the ammonia cracking plant.

4. The system according to one of claims 1 to 3, wherein the emergency condition imposition module (123) is configured to:
set a plurality of virtual emergency situations in the digital twin model (130, 220) to prepare for potential emergency situations;
evaluate response and performance of the digital twin model (130, 220) in the set virtual emergency situation; and
predict adjustments required to ensure safety and stability of the ammonia cracking plant.

5. The system according to one of the previous claims, wherein the data collection and comparison module (124) is configured to identify weaknesses of the system (100) which may occur in each emergency situation and a degree of vulnerability for each replication model based on the data.

6. The system according to one of the previous claims, wherein the scenario generation module (125) is configured to generate a control scenario for the potential emergency situation using comparative data between the first data and the second data.

7. The system according to one of claims 2 to 6, wherein the digital twin model (130, 220) comprises:
a plant control unit (221) corresponding to a replication model for the control device (112, 132) configured to control the ammonia cracking apparatus (111, 131); and
a data collection unit (222) configured to collect the real-time data, preferably the flow rate of a feed for a reforming reaction and the flow rate of a feed for a combustion reaction.

8. The system according to one of claims 2 to 7, wherein the physical component of the ammonia cracking plant further comprises a feed blower (113, 133), a flow rate control valve (114, 134), and at least one reaction unit,
wherein the sensor comprises a temperature sensor (116, 136) and a pressure sensor (117, 137).

9. The system according to claim 8, wherein the at least one reaction unit comprises: a plurality of reaction parts configured to receive a flow rate of a feed for a reforming reaction and a flow rate of a feed for a combustion reaction; and a combustion unit configured to output a combustion flue gas.

10. A method for managing an ammonia cracking plant, the method comprising:
generating a digital twin model (130, 220) comprising a replication model of a physical component of the ammonia cracking plant;
inputting a dynamic energy requirement and output information of an ammonia cracking apparatus (111, 131) included in the ammonia cracking plant into the digital twin model (130, 220) ;
imposing, for a preset emergency scenario, an emergency condition on the replication model of the physical component;
collecting data from the digital twin model (130, 220) under the imposed emergency condition;
comparing first data when the emergency condition is imposed and second data when the emergency condition is not imposed; and
generating a control scenario for the preset emergency scenario based on comparison results of the first data and the second data.

11. Method according to claim 10, wherein the inputting step further includes comparing a difference between the dynamic energy requirement actually required for the digital twin model (130) and an output quantity of the output information of the ammonia cracking plant.

12. Method according to claim 10 or 11, wherein the data comparison step further includes generating comparative data including results of comparing the first data and the second data, and identifying weaknesses of the system (100) which may occur in each emergency situation and a degree of vulnerability for each replication model.

13. Method according to one of claims 10 to 12, further comprising generating control scenarios for a plurality of potential emergency situations using the comparative data between the first data and the second data.

14. Computer-readable medium, which stores instructions in the form of program code, which, when executed by a processor, is configured to generate a program module to perform operations of an ammonia cracking plant under emergency situation conditions.

15. Computer-readable medium according to claim 14, which stores instructions in the form of program code which, when executed by a processor, is configured to generate the program module to perform operations of the method of any one of claims 10 to 13.
